# EUROPÄISCHE PATENTSCHRIFT

(11) **EP 3 280 021 B1**
(45) Veröffentlichungstag und Bekanntmachung des Hinweises auf die Patenterteilung: **24.01.2024**
(21) Anmeldenummer: 17183973.1
(22) Anmeldetag: 31.07.2017
(51) Int. Cl.: H02J 3/18, H02J 3/38

(54) **VERFAHREN ZUM REGELN DER BLINDLEISTUNGSABGABE EINES WINDPARKS SOWIE EIN ENTSPRECHENDER WINDPARK**
METHOD FOR CONTROLLING THE REACTIVE POWER OUTPUT OF A WIND FARM AND CORRESPONDING WIND FARM
PROCÉDÉ DE RÉGLAGE DE LA DISTRIBUTION DE PUISSANCE RÉACTIVE D'UN PARC ÉOLIEN ET PARC ÉOLIEN CORRESPONDANT

(30) Priorität: 04.08.2016 DE 102016009413
(43) Veröffentlichungstag der Anmeldung: 07.02.2018
(73) Patentinhaber: Siemens Gamesa Renewable Energy Service GmbH, 20097 Hamburg (DE)
(72) Erfinder: Koestl, Tobias, 20457 Hamburg (DE)
(74) Vertreter: Glawe, Delfs, Moll

(56) Entgegenhaltungen:
- EP-A2- 2 028 368
- DE-A1-102013 215 396
- DE-A1-102014 200 740
- US-A1- 2013 175 800

## Beschreibung

Die Erfindung betrifft ein Verfahren zum Regeln einer Blindleistungsabgabe eines Windparks, der mehrere Windenergieanlagen, einen Parkmaster und eine Leitung zu einem Verknüpfungspunkt zur Abgabe erzeugter elektrischer Leistung an ein Netz umfasst. Genauer gesagt geht es um die Blindleistungsabgabe des Windparks durch den Parkmaster entsprechend eines einstellbaren Vorgaberegimes, und zwar bei ungestörtem Netz (d. h. Normal-Netzbedingungen).

Zum Ausbau der Erzeugung elektrischer Energie mittels Windenergie werden Windenergieanlagen und Windparks immer weiter höherer Leistung aufgestellt. Sie befinden sich bevorzugt an Standorten mit großem Windangebot, wie insbesondere auf Erhebungen, Flüssen oder auch schon im Meer. Diese Standorte haben gemeinsam, dass sie meist in dünn oder gar nicht besiedelten Gebieten liegen, in denen das elektrische Netz nur eine geringe Leistungsfähigkeit aufweist. Um dennoch eine ausreichend hohe Versorgungsqualität aufrecht zu erhalten, werden verschärfte Anforderungen an die Windenergieanlagen bzw. die Windparks in Bezug auf ihre Netzverträglichkeit gestellt.

Diese Anforderungen werden zusammenfassend als Systemdienstleistungen bezeichnet, die von den Netzbetreibern gefordert werden. Dazu gehört auch die Abgabe von Blindleistung, sei es andauernd oder auf Anforderung durch den Netzbetreiber. Damit beteiligen sich Windenergieanlagen und Windparks ebenso an einer Sicherung der Stabilität des Netzes wie konventionelle Kraftwerke. Ein wesentliches Element hierbei ist, dass auch Windenergieanlagen bzw. Windparks in der Lage sein müssen, die Spannung am Netzanschlusspunkt möglichst genau zu regeln. Häufig ist dazu eine Spannungs-/Blindleistungs-Kennlinie vorgegeben, welche von dem Windpark einzuhalten ist. Je nach den elektrischen Charakteristika des Netzanschlusses. (Netzkurzschlussleistung, Netzimpedanz, Phasenwinkel) kann eine unterschiedliche Steigung dieser Kennlinie vorgegeben sein. In der Regel liegt die Steigerung dieser Kennlinie im Bereich von 0 % bis 20 %. Dabei bedeutet eine Steigung von 0 %, dass die Nennspannung innerhalb des stationären Spannungsbandes unabhängig vom Betriebspunkt des Windparks ausgeregelt werden soll.

Insbesondere bei großen Windparks mit vielen Windenergieanlagen tritt jedoch die Besonderheit hinzu, dass nicht immer alle Windenergieanlagen im Windpark voll betriebsbereit sind und aktiv am Netz betrieben werden. Befinden sich beispielsweise einige Windenergieanlagen nicht im Betrieb (zum Beispiel mangels Wind, wegen Wartungsarbeiten oder aufgrund von Störungen etc.), so kann der Windpark nicht die volle Leistung abgeben. In Bezug auf die Blindleistung bedeutet dies, dass das Blindleistungsstellvermögen des Windparks eingeschränkt ist. Dies kann zur Folge haben, dass der Windpark nicht mehr genug Blindleistung bereitstellen kann, um den Anforderungen aus einer Spannungsregelung zu genügen. Es besteht vielmehr die Gefahr, dass die gegebenenfalls wenigen am Netz befindlichen Windenergieanlagen des Windparks bezüglich ihrer Blindleistungsabgabe (zu) stark ausgelastet werden. Die Spannungsregelung findet damit nicht in der gewünschten Weise statt, so dass es zu deutlichen Abweichungen von der Nennspannung innerhalb des stationären Spannungsbandes kommen kann. Dies gilt zum einen am Anschlusspunkt des Windparks aber auch und besonders an den lokalen Anschlusspunkten der einzelnen Windenergieanlagen innerhalb des Windparks. Hier können beträchtliche, gegebenenfalls sogar zu Schäden an der Windenergieanlage führende Spannungsabweichungen entstehen. Die volle Ausnutzung der Windenergieanlagen für die Bereitstellung von Blindleistung hat den weiteren Nachteil, dass es durch die hohen dabei fließenden Ströme zu lokalen Wirkleistungsverlusten kommen kann. Ferner besteht ein weiterer erheblicher Nachteil darin, dass bei vollständiger Ausschöpfung des gesamten Blindleistungsstellvermögens keine weitere Blindleistung zum Entgegenwirken bei weiteren Spannungsabweichungen verfügbar ist, was sich äußerst negativ auf die Spannungsstabilität auswirken kann.

Betreffend die Behandlung eines anderen Szenarios, nämlich dem Verhalten bei Netzfehlern (Spannungsabfall ist größer als die vorgeschriebene Toleranz, d.h. es liegen keine Normal-Betriebsbedingungen mehr vor) ist es bekannt, auf lokaler Wind energieanlagen-Ebene bei Netzfehlern in einen netzstützenden Modus umzuschalten (EP 2 457 320 B1). Damit soll beim Auftreten eines Netzfehlers zur Stützung des Netzes schnell möglichst viel Blindstrom bereitgestellt werden (Durchfahren von Netzfehlern); dauert der Netzfehler jedoch an, wird die Windenergieanlage abgeschaltet. Eine besondere Behandlung von Situationen, bei denen nicht alle Windenergieanlagen des Windparks einsatzbereit sind, ist nicht vorgesehen.

Aus EP 2 028 368 A2 ist ein Verfahren bekannt, bei dem eine Steuereinheit ansprechend auf einen empfangenen Sollwert für eine elektrische Größe eine Windenergieanlage ansteuert, um einen den Sollwert entsprechenden Istwert bereitzustellen.

Es ist die Aufgabe der Erfindung, ein verbessertes Verfahren und entsprechenden Windpark anzugeben, womit das Blindleistungsregelverhalten des Windparks robuster gemacht werden kann, insbesondere gegenüber Ausfall bzw. Nichtverfügbarkeit von Windenergieanlagen im Windpark.

Die erfindungsgemäße Lösung liegt in den Merkmalen der unabhängigen Ansprüche. Vorteilhafte Weiterbildungen sind Gegenstand der abhängigen Ansprüche.

Bei einem Verfahren zum Regeln einer Blindleistungsabgabe eines Windparks, der mehrere Windenergieanlagen, einen Parkmaster und eine Leitung zu einem Verknüpfungspunkt zur Abgabe erzeugter elektrischer Leistung an ein Netz umfasst, wobei die Blindleistungsabgabe des Windparks vom Parkmaster anhand eines Vorgaberegimes geregelt wird, ist erfindungsgemäß vorgesehen bei einem Betrieb des Windparks unter Normal-Netzbedingungen: Ermitteln eines tatsächlichen Blindleistungsstellvermögens, Prüfen ob dieses über einem einstellbaren Schwellwert liegt, wenn dies der Fall ist, dann Abgeben von Blindleistung entsprechend dem Vorgaberegime, wenn dies nicht der Fall ist, dann Umschalten in ein Ersatzregime, wobei das Ersatzregime sich hinsichtlich der Blindleistungsabgabe von dem Vorgaberegime darin unterscheidet, dass es weicher ist und weniger Blindleistung abgegeben wird, und wobei eine Regelreserve erhalten bleibt.

Kern der Erfindung ist der Gedanke, bei der Regelung des Windparks (also auf Parkebene, nicht auf Windenergieanlagen-Ebene) in Abhängigkeit von dem verfügbaren Blindleistungsstellvermögen von einem Regelregime zu einem anderen umzuschalten, und zwar auf netzschonende Weise. Eine Überlastung der verbliebenen (aktiven) Windenergieanlagen kann damit wirksam vermieden werden. Indem die verbliebenen Windenergieanlagen nicht überlastet werden, kann eine Regelreserve erhalten bleiben, sodass bei weiteren Spannungsabweichungen noch zusätzliche Blindleistung abgegeben werden kann. Die Netzstabilität verbessert sich damit. Verblüffenderweise erreicht die Erfindung damit, dass obwohl (bei reduzierter Anzahl von Windenergieanlagen im Windpark) planvoll auf ein "weicheres" Ersatzregime umgeschaltet wird (bei dem in der Regel weniger Blindleistung abgegeben wird), dennoch eine Verbesserung der Netzstabilität erreicht werden kann. Dies ist im einschlägigen Stand der Technik ohne Beispiel.

Unter dem Begriff des Blindleistungsstellvermögens wird die maximale von dem Windpark abgegebene Blindleistung verstanden, unter Berücksichtigung der zur Verfügung stehenden Betriebsmittel (insbesondere Windenergieanlagen). Es werden hierbei nur solche Betriebsmittel berücksichtigt, die betriebsbereit sind und Blindleistung abgeben können. Aufgrund von Wartung oder Störungen stillgesetzte Windenergieanlagen zählen nicht mit. Die Größe des Blindleistungsstellvermögens ist also keine Konstante des Windparks, sondern schwankt abhängig von der Verfügbarkeit der Betriebsmittel.

Zweckmäßigerweise sieht die Erfindung ein gedämpftes Umschalten zwischen Vorgaberegime und Ersatzregime mittels einer Umschalt-Dämpfung vor. Es wird so ein weiches Umschalten erreicht und harte Übergänge, insbesondere Sprünge, werden vermieden. Damit wird eine erhebliche Verbesserung in Bezug auf netzschonendes Verhalten realisiert.

Mit Vorteil umfasst die Umschalt-Dämpfung eine Ratenbegrenzung, vorzugsweise begrenzt auf eine vorbestimmte feste Rate. Alternativ oder zusätzlich ist auch die Verwendung einer PT1-Funktion möglich. Mit einer solchen Ratenbegrenzung wird eine zu scharfe Reaktion beim Umschalten vermieden. Es wird so ein allmähliches Überblenden erreicht, welches sich schonend in Bezug auf das Verhalten des Windparks am Netz und ferner auf die Regelstrecke (insbesondere Windenergieanlage) auswirkt. Zweckmäßigerweise erfolgt die Ratenbegrenzung nur temporär beim Umschalten.

Weiter umfasst die Umschalt-Dämpfung vorzugsweise eine gezielte Initialisierung des Regelregimes, auf das umgeschaltet wird. Besonders bewährt hat sich eine gezielte Initialisierung des jeweiligen Führungsparameters. Bei einer Spannungsregelung wird hierbei der Spannungssollwert initialisiert, während bei einer Blindleistungsregelung der Blindleistungssollwert bzw. bei einer Leistungsfaktorregelung der Soll-Leistungsfaktor initialisiert wird. Zweckmäßigerweise wird für die gezielte Initialisierung ein aktueller Messwert verwendet.

Besonders vorteilhaft ist eine Kombination der genannten Maßnahmen zur Dämpfung. Mit Vorteil geschieht dies in der Weise, dass erst die Initialisierung und danach die Ratenbegrenzung erfolgt. Damit wird ein harmonisches und besonders weiches Regelungsverhalten von Anfang an erreicht, und zwar bei gleichzeitig maximal schnellem Übergang zu dem neuen Regelregime.

Besonders vorteilhaft ist es, zum Umschalten zwischen den Regelregimen eine Umschalt-Hysterese zu verwenden. Damit wird ein zu häufiges Hin- und Herschalten vermieden und die Regelungsgüte wird somit verbessert.

Zweckmäßigerweise umfasst das Ersatzregime eine Leistungsfaktor-Regelung. Damit wird auf so einfache wie vorteilhafte Weise eine geeignete Regelung erreicht, die abgestimmt ist für ein vermindertes Blindleistungsstellvermögen des Windparks. Mit einem solchen Ersatzregime ist sichergestellt, dass die verfügbaren, am Netz befindlichen Windenergieanlagen keiner unnötig starken und dauerhaften Belastung durch (zu) hohe Blindleistung-Anforderungen unterliegen. Dies schont die Windenergieanlagen und sichert ihre Regelungsfähigkeit, da gegebenenfalls noch Regelungsreserve verbleibt. Überdies werden Wirkleistungsverluste aufgrund zu hoher lokaler Blindleistungsbereitstellung damit wirksam verhindert.

Besonders bevorzugt ist es, wenn das Ersatzregime einen parkeigenen Parameter als Führungsgröße verwendet. Unter "parkeigen" wird ein elektrischer Parameter verstanden, der nicht von außen aufgeprägt ist; Leistungsfaktor ist parkeigen, Netzspannung hingegen nicht. Beispielsweise ist somit die Verwendung einer Leistungsfaktorregelung als Ersatzregime zweckmäßig. Dies hat den Vorteil, dass auch dann eine ausreichende und stabile Regelung des gesamten Windparks hinsichtlich der Blindleistungsabgabe erfolgen kann, wenn die Kommunikation gestört oder unterbrochen ist. Damit wird das Ersatzregime besonders robust. Für eine autarke Blindleistungsregelung gilt entsprechendes. Optional kann weiter das Ersatzregime autark in den Windenergieanlagen ausführbar sein.

Zweckmäßigerweise wird das Blindleistungsstellvermögen bestimmt anhand einer oder mehrerer Parameter aus einer Liste umfassend die Anzahl betriebsbereiter Windenergieanlagen und/oder Umrichter im Windpark, die am Verknüpfungspunkt eingespeiste Wirkleistung und verfügbare Blindleistung im Windpark. Die Verwendung der Anzahl n der betriebsbereiten Windenergieanlagen bietet den Vorteil, dass der Parameter im Parkmaster in der Regel ohnehin zur Verfügung steht und daher ohne Zusatzaufwand leicht bestimmbar ist (es sei angemerkt, dass bei der Bestimmung der Anzahl auch diejenigen Windenergieanlagen berücksichtigt werden können, die zwar stillstehen aber deren Umrichter am Netz aktiv ist). Die Verwendung der beiden anderen Parameter eingespeiste Wirkleistung bzw. verfügbare Blindleistung bietet den Vorteil, dass es sich um leistungsbezogene Größen handelt die den aktuellen Leistungsstand des Windparks reflektieren.

Vorteilhafterweise wird das Umschalten in das Ersatzregime verhindert im Fall einer Netzstörung. Damit wird eine klare Trennung geschaffen zwischen dem erfindungsgemäßen Verfahren, welches auf den Normalbetrieb des Windparks unter ungestörten Netzbedingungen zielt, und den davon streng zu unterscheidenden Verfahren zum Betreiben während einer Netzstörung (insbesondere Verfahren zum Durchfahren eines Netzfehlers, wie Low Voltage Ride Through LVRT). Zweckmäßigerweise wird zum vereinfachten Erkennen einer Netzstörung eine Spannungs- und/oder Frequenzabweichung verwendet.

Die Erfindung erstreckt sich ferner auf einen Windpark umfassend mehrere Windenergieanlagen, einen Parkmaster und eine Leitung zu einem Verknüpfungspunkt zur Abgabe erzeugter elektrischer Leistung an ein Netz, wobei der Parkmaster einen Regler zum Regeln einer Blindleistungsabgabe des Windparks anhand eines Vorgaberegimes aufweist, und erfindungsgemäß der Regler dazu ausgebildet ist, den Betrieb des Windparks unter Normal-Netzbedingungen wie vorstehend beschrieben durchzuführen. Für weitere Einzelheiten wird auf vorstehende Erläuterung verwiesen.

Die Erfindung wird nachfolgend unter Bezugnahme auf die beigefügte Zeichnung anhand eines Ausführungsbeispiels näher erläutert. Es zeigen:
- Fig. 1: eine schematische Ansicht eines Windparks mit mehreren Windenergieanlagen und einem Parkmaster gemäß der Erfindung;
- Fig. 2: eine schematische Ansicht eines Blindleistungsreglers des Parkmasters mit zwei verschiedenen Regelregimen;
- Fig. 3: einen Ablaufplan zu einem Ausführungsbeispiel des erfindungsgemäßen Verfahrens; und
- Fig. 4: Diagramme darstellend das Regelungsverhalten gemäß dem Ausführungsbeispiel der Erfindung.

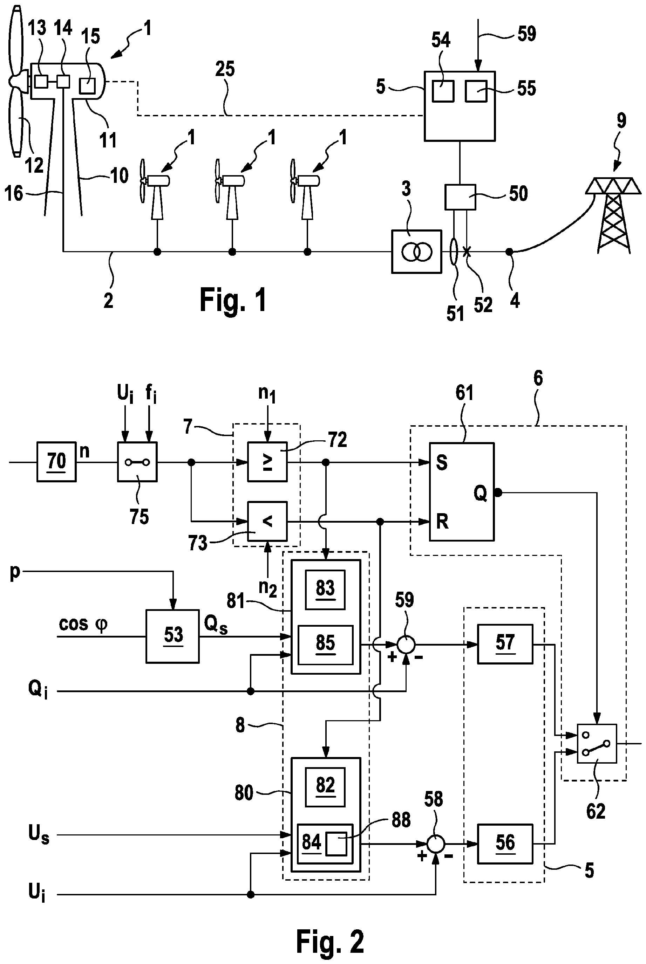

In Figur 1 ist ein Windpark gemäß einem Ausführungsbeispiel der Erfindung dargestellt. Der Windpark umfasst mehrere Windenergieanlagen 1, die an ein parkinternes Netz 2 angeschlossen sind. Das parkinterne Netz 2 ist über einen als Hochspannungstransformator ausgeführten Parktransformator 3 angeschlossen an einen Verknüpfungspunkt 4, über den die vom Windpark erzeugte elektrische Leistung an ein Übertragungsnetz 9 abgegeben wird. Ferner ist ein Parkmaster 5 vorgesehen, der den Betrieb der Windenergieanlage 1 überwacht und steuert. Er erhält Vorgaben von einem Betreiber des Übertragungsnetzes 9 und kommuniziert mit den Windenergieanlagen über ein parkinternes Signalnetz 25.

Die Windenergieanlage 1 weist einen Turm 10 mit einer Gondel 11 auf, die am oberen Ende des Turms 10 in Azimutrichtung schwenkbar gelagert ist. An einer Stirnseite der Gondel 11 ist ein Windrotor 12 drehbar angeordnet, der über eine (nicht dargestellte) Rotorwelle einen Generator 13 zur Erzeugung elektrischer Leistung antreibt, wobei der Generator 13 mit einem Umrichter 14 zusammenwirkt. Die so erzeugte elektrische Leistung wird über eine Anschlussleitung 16 an das parkinterne Netz 2 abgegeben. Die Windenergieanlage 1 weist ferner eine Steuerung 15 auf, welche den Betrieb der einzelnen Komponenten der Windenergieanlage steuert, und zwar auf Basis von Vorgaben des Parkmasters 5. Diese Vorgaben werden über ein Kommunikationsnetz 25 an die Betriebssteuerung 15 der einzelnen Windenergieanlage 1 ermittelt.

Der Parkmaster 5 regelt die Windenergieanlagen 1 und überwacht das Verhalten des Windparks im Ganzen gegenüber dem Netz 9. Dazu sind im Bereich des Verknüpfungspunkts 4 Sensoren für Spannung 51 und Strom 52 vorgesehen. Sie sind angelegt an eine Berechnungseinheit 50, welche aus den von den Sensoren 51 und 52 gelieferten Messwerten zu Spannung und Strom Informationen über die Phasenlage, die Wirkleistung, Blindleistung, Scheinleistung sowie die Frequenz bestimmt und an den Parkmaster 5 übermittelt. Über das Kommunikationsnetz 25 erhält der Parkmaster 5 Statusinformationen von den Windenergieanlagen 1, insbesondere zu Blindleistungsvermögen und Betriebszustand (bspw. netzparallel, Stillstand mit Umrichter am Netz, vom Netz getrennt etc.). An dem Parkmaster 5 ist ferner ein Eingang 59 vorgesehen, an den Vorgaben von einer übergeordneten Instanz, beispielsweise einem Betreiber des Übertragungsnetzes 9, angelegt sein können. Auf Grundlage dieser Informationen regelt der Parkmaster 5 die abgegebene Wirkleistung sowie die abgegebene Blindleistung. Hierzu sind ein Wirkleistungsregler 54 sowie ein Blindleistungsregler 55 im Parkmaster 5 vorgesehen.

Nachfolgend sei die Betriebsweise des Blindleistungsreglers 55 näher anhand von Figur 2 beschrieben. Der Blindleistungsregler 55 weist zwei verschiedene Regelregime auf. Ein erstes Regelregime 56 ist für den Normalbetrieb vorgesehen und ist implementiert als eine Spannungsregelung. An einem vor den Eingang des Reglers 56 geschalteten Differenzglied 58 sind Werte für einen Soll-Spannungswert U_{S} sowie ein Wert für die gemessene tatsächliche Spannung Uᵢ angelegt. Daraus wird eine Spannungsabweichung bestimmt, aus welcher der Spannungsregler einen Sollwert für die Windenergieanlagen zur Blindleistungsregelung ermittelt. Ferner ist ein zweites Regelregime 57 vorgesehen, das dazu ausgebildet ist, eine Blindleistungsregelung basierend auf einem Leistungsfaktor als Vorgabe zu implementieren. Aus der gemessenen Wirkleistung P und dem vorgegebenen Leistungsfaktorsollwert cos ϕ wird mittels eines Berechnungsblocks 53 ein Wert für eine einzustellende Blindleistung Q_{S} berechnet. Mittels eines zweiten Differenzglieds 59 wird dieser Wert verglichen mit der gemessenen, tatsächlich abgegebenen Blindleistung Qᵢ. Daraus wird eine Blindleistungsabweichung ermittelt, die ein Eingangssignal für die Regelung mittels des zweiten Regelregimes 57 bildet.

Die Umschaltung zwischen den beiden Regelregimen 56, 57 erfolgt abhängig von dem Blindleistungsstellvermögen des Windparks. In dem dargestellten Ausführungsbeispiel ist als Parameter zur Bestimmung des Blindleistungsstellvermögens die Anzahl n der Windenergieanlagen 1 des Windparks, die am Netz verfügbar sind, verwendet. Diese wird mittels des Detektors 70 bestimmt anhand von Statusinformationen, welche im Parkmaster 5 vorliegen. Die so bestimmte Anzahl n wird als Eingangssignal angelegt an einen Schwellwertschalter 7. Der Schwellwertschalter 7 ist mit einem Hysteresemodul versehen, welches durch eine Kombination zweier Grenzwertschalter 72, 73 realisiert ist. Der erste Grenzwertschalter 72 bestimmt, ob die Anzahl der Windenergieanlagen über einem einstellbaren Schwellwert n₁ liegt (oder zumindest gleich groß ist). Vorliegend sei als Beispiel für den Schwellwert n₁ ein Wert von 45 Windenergieanlagen angenommen. Ist das der Fall, dann ist die obere der beiden Ausgangsleitungen der Schwellwertschalter 7 aktiv. Sie ist angelegt an den Setzeingang eines SR-Flipflops (mit Rücksetzdominanz) 61, welches zusammen mit einer Schalteinheit 62 ein Umschaltmodul 6 bildet. Das Flipflop 61 ist dann gesetzt, und die Schalteinheit 62 so betätigt, dass der Schalter die in Figur 2 dargestellte Stellung einnimmt. Damit ist das erste Regelregime 56 geschaltet. - Es sei nun angenommen, dass nur eine geringe Anzahl von Windenergieanlagen 1 in dem Windpark aktiv sei. Das Blindleistungsstellvermögen ist damit stark beschränkt. Die geringe Anzahl sei kleiner als ein zweiter Schwellwert n₂, für den beispielhaft ein Wert von 40 gewählt sei. Damit schaltet der Grenzwertschalter 73 durch. Es ist nunmehr die untere Ausgangsleitung des Schwellwertschalters 7 aktiv. Diese ist angelegt an einen Rücksetzeingang des SR-Flipflops 61. Damit wechselt das Flipflop 61 seinen Ausgangszustand, so dass die Schalteinheit 62 entsprechend umschaltet. Es wird somit auf das zweite Regelregime 57 umgeschaltet.

Damit wird abhängig von dem Blindleistungsstellvermögen des Windparks der Blindleistungsregler 55 des Windparks umgeschaltet zwischen einem ersten Regelregime 56, bei dem gemäß Vorgabe des Netzbetreibers die Spannung mittels Blindleistung geregelt wird, und einem zweiten Regelregime 57, welches als ein Ersatzregime fungiert und eine Blindleistung basierend auf dem Leistungsfaktor einregelt.

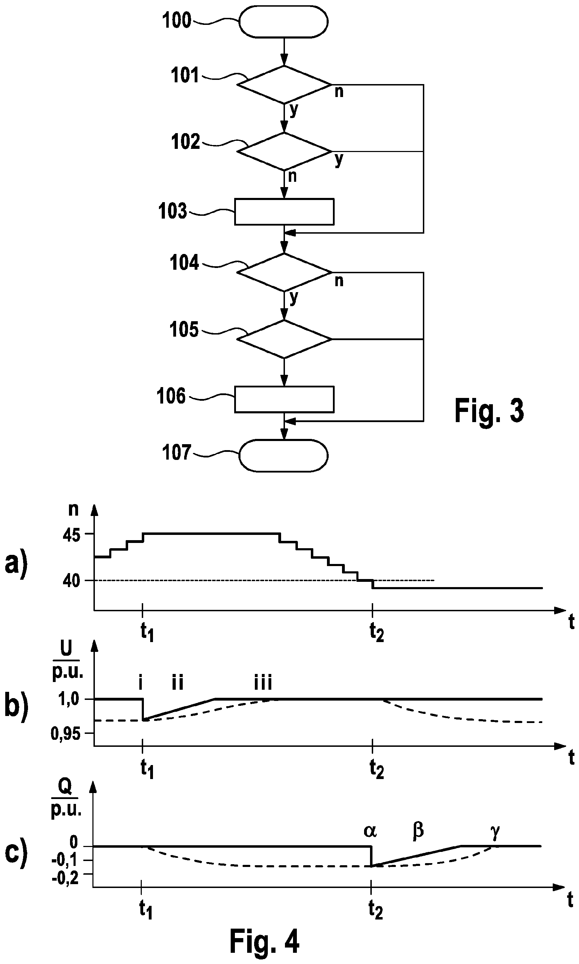

Zur Gewährleistung eines weichen Umschaltens ist eine Umschalt-Dämpfung 8 vorgesehen. Sie ist zweiteilig ausgeführt, wobei ein erster Teil 80 auf das erste Regelregime (Vorgaberegime 56) wirkt und der zweite Teil 81 auf das zweite Regelregime (Ersatzregime 57). Die Umschalt-Dämpfung 8 ist angesteuert von dem Grenzwertschalter 7. Der erste Teil 80 weist ein Initialisierungsmodul 82 sowie ein Ratenbegrenzungsmodul 84 auf, wobei letzteres einen Ratenbegrenzer 88 mit fester Rate umfasst. Der zweite Teil 81 ist entsprechend aufgebaut, mit einem zweiten Initialisierungsmodul 83 sowie einem zweiten Ratenbegrenzungsmodul 85. Die Funktionsweise wird nachfolgend unter Bezugnahme auf die Darstellung des Verfahrens in Figur 3 näher erläutert werden.

Das Verfahren beginnt mit Schritt 100, wobei mittels des Detektors 70 das Blindleistungsstellvermögen bestimmt wird. In dem dargestellten Ausführungsbeispiel geschieht dies dadurch, dass die Anzahl der verfügbaren Windenergieanlagen im Netzbetrieb bestimmt wird. Es sei angenommen, dass die Anzahl größer sei als 45. Im nächsten Schritt 101 wird mittels des Grenzwertschalters 7 geprüft, ob die Anzahl der verfügbaren Windenergieanlagen größer ist als der erste Grenzwert n₁, der 45 beträgt. Wenn nein (n) erfolgt ein Weitersprung zu Schritt 104. Wenn ja (y) bedeutet dies, dass die Blindleistungsregelung nach dem Vorgaberegime 56 (Spannungsregelung) durchgeführt werden soll. Es wird dann im folgenden Schritt 102 geprüft, ob dieses Regime bereits aktiv ist. Wenn ja gibt es nichts zu veranlassen, da das korrekte Regelregime bereits aktiv ist. Wenn nein erfolgt eine Verzweigung zu Schritt 103, womit ein Wechsel des Betriebsmodus von dem Ersatzregime zum Vorgaberegime durchgeführt wird. Dies erfolgt unter Initialisierung des Spannungssollwerts auf die gemessene Spannung Uᵢ mittels des Initialisierungsmoduls 82, und danach eine temporäre Ratenbegrenzung mittels des Ratenbegrenzungsmoduls 84. Der Windpark wird dann betrieben mit einer Blindleistungsregelung gemäß dem Vorgaberegime 56 (Spannungsregelung).

Im Weiteren wird dann geprüft, ob die Anzahl der betriebsbereiten Windenergieanlagen 1 unter die kritische Grenze sinkt. Dies erfolgt mittels des Grenzwertschalters 7 in Schritt 104, wobei nunmehr der zweite Grenzwert für den Übergang zu dem Ersatzregime 57 maßgebend ist (Hysterese-Funktion des Grenzwertschalters 7). Ist das nicht der Fall, sind also mindestens 40 Windenergieanlagen betriebsbereit, besteht kein Bedarf für eine Umschaltung, und es wird zum Ende der Programmschleife 107 verzweigt. Das Verfahren beginnt dann von neuem. Ist das jedoch der Fall, dass nunmehr weniger als 40 Windenergieanlagen betriebsbereit sind, so wird in Schritt 105 geprüft, ob das Ersatzregime 57 bereits aktiviert ist. Ist das der Fall, so besteht kein Handlungsbedarf, und es wird zu dem Schleifenende in Schritt 107 verzweigt. Ist das jedoch nicht der Fall, dann ist ein Wechsel des Regelregimes zum Ersatzregime 57 erforderlich. Dies erfolgt in Schritt 106. Der Wechsel umfasst eine Initialisierung des Blindleistungs-Sollwerts auf die gemessene Blindleistung mittels des Initialisierungsmoduls 83, und danach eine Aktivierung der temporären Ratenbegrenzung mittels des Ratenbegrenzungsmoduls 85.

Diese Funktionsweise ist in den Diagrammen in Figur 4a bis c visualisiert. In Figur 4a ist die Anzahl der verfügbaren Windenergieanlagen dargestellt, wobei sich die Anzahl n über die Zeit hinweg ändert. Anfänglich steigt die Anzahl der betriebsbereiten Windenergieanlagen an und erreicht zum Zeitpunkt t1 die Anzahl 45. Dieser Zustand bleibt eine ganze Zeit erhalten, bis dann kurz vor dem Zeitpunkt t2 die Anzahl der Windenergieanlagen allmählich absinkt, bis sie schließlich zum Zeitpunkt t2 mit einer Anzahl 39 den unteren Grenzwert unterschreitet. In den Figuren 4b und 4c sind die Spannung sowie die abgegebene Blindleistung bezogen auf den Verknüpfungspunkt 4 dargestellt. Mit gestrichelter Linie sind die jeweils gemessenen Werte für die Spannung Uᵢ bzw. die Blindleistung Qⱼ dargestellt, während mit durchgezogener Linie der Spannungs-Sollwert Uₛ bzw. der aus dem Leistungsfaktor ermittelte Blindleistungs-Sollwert Qₛ dargestellt ist. Zum Zeitpunkt t₁ erkennt der Grenzwertschalter 7, dass nunmehr die Anzahl der in Betrieb befindlichen Windenergieanlagen im Windpark ausreicht für einen Betrieb mit Spannungsregelung. Es wird entsprechend auf die Spannungsregelung gemäß Vorgaberegime 56 umgeschaltet. Dies erfolgt in einem ersten Schritt durch Initialisieren des Spannungs-Sollwerts U_{S} mittels des Initialisierungsmoduls 82 (Phase i). Damit wird ein weiches Einsetzen der Spannungsregelung erreicht. Nach dem Initialisieren wird der Spannungssollwert verändert zu dem an sich vorgesehenen Spannungs-Sollwert, wobei dieser allmählich mittels des Ratenbegrenzungs-Moduls 84 angefahren wird (Phase ii). Nachfolgend wird die Spannung eingeregelt (Phase iii). Die Spannungsregelung ist voll aktiv, d.h. die Blindleistung selbst ist nunmehr ein freier Parameter und weicht von ihrem Sollwert ab (vergleiche Figur 4c).

Die Spannungsregelung gemäß Vorgaberegime 56 wird beibehalten auch bei sinkender Anzahl der Windenergieanlagen 1, bis schließlich zum Zeitpunkt t₂ der untere Grenzwert erreicht ist. Nunmehr erfolgt ein Umschalten in das Ersatzregime 57, welches eine Blindleistungsregelung vorsieht. Dies erfolgt in einem ersten Schritt durch Initialisieren des Blindleistungs-Sollwerts auf die gemessene Blindleistung mittels des Initialisierungsmoduls 83 (Phase α). Damit wird ein ruckfreies Einsetzen der Regelung gemäß Ersatzregime 57 erreicht. Um den Übergang weiterhin weich zu gestalten, wird nachfolgend der so initialisierte Blindleistungs-Sollwert verändert zu dem an sich vorgesehenen Blindleistungs-Sollwert Qₛ, wobei dieser ratenbegrenzt mittels des Ratenbegrenzungs-Moduls 85 angefahren wird (Phase β). Anschließend wird die Blindleistung auf den Sollwert eingeregelt (Phase γ).

Optional ist ein Inhibitor 75 vorgesehen, der auf den Grenzwertschalter 7 und/oder das Umschaltmodul 6 wirkt. Damit wird im Fall einer Netzstörung das Umschalten verhindert. Der Inhibitor kann dazu Eingänge für Messwerte von Spannung Uᵢ und Frequenz fi aufweisen.

## Patentansprüche

1. Verfahren zum Regeln einer Blindleistungsabgabe eines Windparks, der mehrere Windenergieanlagen (1), einen Parkmaster (5) und eine Leitung zu einem Verknüpfungspunkt (4) zur Abgabe erzeugter elektrischer Leistung an ein Netz (9) umfasst, wobei
die Blindleistungsabgabe des Windparks vom Parkmaster (5) anhand eines Vorgaberegimes (56) geregelt wird,
**gekennzeichnet durch**
bei einem Betrieb des Windparks unter Normal-Netzbedingungen:
- Ermitteln eines tatsächlichen Blindleistungsabgabevermögens,
- Prüfen ob dieses über einem einstellbaren Schwellwert liegt,
- wenn dies der Fall ist, dann Abgeben von Blindleistung entsprechend dem Vorgaberegime (56),
- wenn dies nicht der Fall ist, dann Umschalten in ein Ersatzregime (57), wobei das Ersatzregime (57) sich hinsichtlich Blindleistungsabgabe von dem Vorgaberegime (56) darin unterscheidet, dass es weicher ist und weniger Blindleistung abgegeben wird, und wobei eine Regelreserve erhalten bleibt.

2. Verfahren nach Anspruch 1, **gekennzeichnet durch** gedämpftes Umschalten zwischen Vorgaberegime (56) und Ersatzregime (57), vorzugsweise mittels einer Umschalt-Dämpfung (8).

3. Verfahren nach Anspruch 2, **dadurch gekennzeichnet, dass** die Umschalt-Dämpfung (8) eine Ratenbegrenzung umfasst, vorzugsweise unter Verwendung eines festen Grenzwerts.

4. Verfahren nach Anspruch 3, **dadurch gekennzeichnet, dass** die Umschalt-Dämpfung (8) und die Ratenbegrenzung nur temporär wirken.

5. Verfahren nach einem der Ansprüche 2 bis 4, **dadurch gekennzeichnet, dass** die Umschalt-Dämpfung (8) eine gezielte Initialisierung desjenigen Regimes vornimmt, auf das umgeschaltet wird.

6. Verfahren nach Anspruch 5, **dadurch gekennzeichnet, dass** die gezielte Initialisierung mittels eines aktuellen Messwerts eines Parameters des Regimes erfolgt.

7. Verfahren nach Anspruch 6, **dadurch gekennzeichnet, dass** der Parameter ein Führungsparameter ist.

8. Verfahren nach einem der vorangehenden Ansprüche, **gekennzeichnet durch** Verwenden einer Umschalt-Hysterese zum Umschalten zwischen den Regimes.

9. Verfahren nach einem der vorangehenden Ansprüche, **dadurch gekennzeichnet, dass** das Ersatzregime (57) einen parkeigenen Parameter als Führungsgröße verwendet.

10. Verfahren nach einem der vorangehenden Ansprüche, **dadurch gekennzeichnet, dass** das Ersatzregime (57) autark in den Windenergieanlagen ausführbar ist.

11. Verfahren nach einem der vorangehenden Ansprüche, **gekennzeichnet durch** Bestimmen des Blindleistungsstellvermögens anhand einer oder mehrerer Parameter aus einer Liste umfassend die Anzahl betriebsbereiter Windenergieanlagen (1) und/oder Umrichter (14) im Windpark, die am Verknüpfungspunkt (4) eingespeiste Wirkleistung und der Blindleistung der betriebsbereiten Windenergieanlagen (1) und/oder Umrichter (14).

12. Verfahren nach einem der vorangehenden Ansprüche, **gekennzeichnet durch** Inhibieren des Umschaltens in das Ersatzregime (57) im Fall einer Netzstörung.

13. Verfahren nach Anspruch 12, **gekennzeichnet durch** Verwenden einer Spannungs- und/oder Frequenzabweichung zum autarken Erkennen einer Netzstörung.

14. Windpark umfassend mehrere Windenergieanlagen (1), einen Parkmaster (5) und eine Leitung zu einem Verknüpfungspunkt (4) zur Abgabe erzeugter elektrischer Leistung an ein Netz (9), wobei der Parkmaster (5) einen Regler (55) zum Regeln einer Blindleistungsabgabe des Windparks (5) anhand eines Vorgaberegimes (56) aufweist,
**dadurch gekennzeichnet, dass**
der Regler ein wechselbares Regime (57) aufweist, und ferner vorgesehen sind
ein Detektor (70), der dazu eingerichtet ist,
bei einem Betrieb des Windparks unter Normal-Netzbedingungen ein tatsächliches Blindleistungsabgabevermögen zu ermitteln,
ein Prüfmodul (7), welches dazu eingerichtet ist, zu bestimmen, ob dieses über einem einstellbaren Schwellwert liegt, und
eine Regimewechseleinheit (6), die dazu ausgebildet ist,
bei Überschreiten des Schwellwerts ein Regelregime zum Abgeben von Blindleistung entsprechend dem Vorgaberegime (56) zuzuschalten und andernfalls umzuschalten in ein Ersatzregime (57), wobei das Ersatzregime (57) sich hinsichtlich Blindleistungsabgabe von dem Vorgaberegime (56) darin unterscheidet, dass es weicher ist und weniger Blindleistung abgegeben wird, und wobei eine Regelreserve erhalten bleibt.

15. Windpark nach Anspruch 14, **dadurch gekennzeichnet, dass** die Blindleistungsregelung (55) nach einem der Ansprüche 1 bis 13 weitergebildet ist.

## Claims

1. Method for controlling a reactive power output of a wind farm comprising a plurality of wind energy installations (1), a wind farm master (5) and a line to a connection point (4) for outputting generated electrical power to a grid (9), wherein
the reactive power output of the wind farm is controlled by the wind farm master (5) on the basis of a specified regime (56),
**characterized by**
during operation of the wind farm under normal grid conditions:
- determining an actual reactive power output capability,
- checking whether this capability is above an adjustable threshold value,
- if this is the case, outputting reactive power according to the specified regime (56),
- if this is not the case, changing over to a substitute regime (57), wherein the substitute regime (57) differs from the specified regime (56) in terms of the reactive power output in that it is more gentle and less reactive power is output, and wherein a control reserve is maintained.

2. Method according to Claim 1, **characterized by** attenuated changing over between the specified regime (56) and the substitute regime (57), preferably by means of changeover attenuation (8).

3. Method according to Claim 2, **characterized in that** the changeover attenuation (8) comprises a rate limitation, preferably using a fixed limit value.

4. Method according to Claim 3, **characterized in that** the changeover attenuation (8) and the rate limitation have only a temporary effect.

5. Method according to one of Claims 2 to 4, **characterized in that** the changeover attenuation (8) performs targeted initialization of that regime which is changed over to.

6. Method according to Claim 5, **characterized in that** the targeted initialization is carried out by means of a current measured value of a parameter of the regime.

7. Method according to Claim 6, **characterized in that** the parameter is a reference parameter.

8. Method according to one of the preceding claims, **characterized by** use of changeover hysteresis to change over between the regimes.

9. Method according to one of the preceding claims, **characterized in that** the substitute regime (57) uses a farm's own parameter as the reference variable.

10. Method according to one of the preceding claims, **characterized in that** the substitute regime (57) can be autonomously carried out in the wind energy installations.

11. Method according to one of the preceding claims, **characterized by** determining the reactive power adjustment capability on the basis of one or more parameters from a list comprising the number of operationally ready wind energy installations (1) and/or converters (14) in the wind farm, the active power fed in at the connection point (4) and the reactive power of the operationally ready wind energy installations (1) and/or converters (14).

12. Method according to one of the preceding claims, **characterized by** inhibiting the changeover to the substitute regime (57) in the event of a grid fault.

13. Method according to Claim 12, **characterized by** use of a voltage and/or frequency deviation to autonomously detect a grid fault.

14. Wind farm comprising a plurality of wind energy installations (1), a wind farm master (5) and a line to a connection point (4) for outputting generated electrical power to a grid (9), wherein the wind farm master (5) has a controller (55) for controlling a reactive power output of the wind farm (5) on the basis of a specified regime (56),
**characterized in that**
the controller has a changeable regime (57), and the following are also provided
a detector (70) which is configured to determine an actual reactive power output capability during operation of the wind farm under normal grid conditions,
a checking module (7) which is configured to determine whether this capability is above an adjustable threshold value, and
a regime changing unit (6) which is designed to connect a control regime for outputting reactive power according to the specified regime (56) when the threshold value is exceeded and otherwise to change over to a substitute regime (57), wherein the substitute resume (57) differs from the specified regime (56) in terms of the reactive power output **in that** it is more gentle and less reactive power is output, and wherein a control reserve is maintained.

15. Wind farm according to Claim 14, **characterized in that** the reactive power control (55) is developed according to one of Claims 1 to 13.

## Revendications

1. Procédé permettant de régler une distribution de puissance réactive d'un parc éolien qui comprend plusieurs éoliennes (1), un maître de parc (5) et une ligne jusqu'à un point de liaison (4) pour distribuer la puissance électrique produite à un réseau (9), dans lequel
la distribution de puissance réactive du parc éolien est réglée par le maître de parc (5) à l'aide d'un régime spécifié (56),
**caractérisé par** les étapes
effectuées lors d'un fonctionnement du parc éolien dans des conditions de réseau normales, consistant à :
- établir une capacité réelle de distribution de puissance réactive,
- contrôler si elle est supérieure à une valeur seuil réglable,
- si c'est le cas, alors distribuer la puissance réactive selon le régime spécifié (56),
- si ce n'est pas le cas, alors commuter sur un régime de remplacement (57), dans lequel le régime de remplacement (57) est différent du régime spécifié (56) concernant la distribution de puissance réactive en ce qu'il est plus souple et distribue moins de puissance réactive, et dans lequel une réserve de réglage est conservée.

2. Procédé selon la revendication 1, **caractérisé par** une commutation atténuée entre le régime spécifié (56) et le régime de remplacement (57), de préférence au moyen d'une atténuation de commutation (8).

3. Procédé selon la revendication 2, **caractérisé en ce que** l'atténuation de commutation (8) comprend une limitation de débit, de préférence en utilisant une valeur limite fixe.

4. Procédé selon la revendication 3, **caractérisé en ce que** l'atténuation de commutation (8) et la limitation de débit n'ont qu'un effet temporaire.

5. Procédé selon l'une quelconque des revendications 2 à 4, **caractérisé en ce que** l'atténuation de commutation (8) procède à une initialisation ciblée du régime vers lequel la commutation est effectuée.

6. Procédé selon la revendication 5, **caractérisé en ce que** l'initialisation ciblée est effectuée au moyen d'une valeur de mesure actuelle d'un paramètre du régime.

7. Procédé selon la revendication 6, **caractérisé en ce que** le paramètre est un paramètre de référence.

8. Procédé selon l'une quelconque des revendications précédentes, **caractérisé par** l'utilisation d'une hystérésis de commutation pour commuter entre les régimes.

9. Procédé selon l'une quelconque des revendications précédentes, **caractérisé en ce que** le régime de remplacement (57) utilise un paramètre propre au parc comme grandeur de référence.

10. Procédé selon l'une quelconque des revendications précédentes, **caractérisé en ce que** le régime de remplacement (57) peut être effectué de manière autonome dans les éoliennes.

11. Procédé selon l'une quelconque des revendications précédentes, **caractérisé par** la détermination de la capacité de fourniture de puissance réactive à l'aide d'un ou de plusieurs paramètres d'une liste qui comprend le nombre d'éoliennes (1) et/ou de convertisseurs (14) opérationnels dans le parc éolien, la puissance active injectée au point de liaison (4) et la puissance réactive des éoliennes (1) et/ou des convertisseurs (14) opérationnels.

12. Procédé selon l'une quelconque des revendications précédentes, **caractérisé par** l'inhibition de la commutation sur le régime de remplacement (57) en cas de dérangement du réseau.

13. Procédé selon la revendication 12, **caractérisé par** l'utilisation d'un écart de tension et/ou de fréquence pour la reconnaissance autonome d'un dérangement de réseau.

14. Parc éolien comprenant plusieurs éoliennes (1), un maître de parc (5) et une ligne jusqu'à un point de liaison (4) pour distribuer de l'énergie électrique produite à un réseau (9), dans lequel le maître de parc (5) présente un régulateur (55) pour régler une distribution de puissance réactive du parc éolien (5) à l'aide d'un régime spécifié (56),
**caractérisé en ce que**
le régulateur présente un régime (57) échangeable, et **en ce qu'**en outre sont prévus
un détecteur (70) qui est conçu pour établir une capacité réelle de distribution de puissance réactive lors du fonctionnement du parc éolien dans des conditions de réseau normales,
un module de contrôle (7) qui est conçu pour déterminer si ladite capacité est supérieure à une valeur seuil réglable, et
une unité de changement de régime (6) qui est réalisée, lors du dépassement de la valeur seuil, pour mettre en circuit un régime de réglage pour distribuer la puissance réactive selon le régime spécifié (56) ou sinon pour commuter sur un régime de remplacement (57), dans lequel le régime de remplacement (57) est différent du régime spécifié (56) concernant la distribution de puissance réactive **en ce qu'**il est plus souple et distribue moins de puissance réactive, et dans lequel une réserve de réglage est conservée.

15. Parc éolien selon la revendication 14, **caractérisé en ce que** le réglage de puissance réactive (55) est développé selon l'une quelconque des revendications 1 à 13.
